# EUROPEAN PATENT SPECIFICATION

(11) **EP 2 255 618 B1**
(45) Date of publication and mention of the grant of the patent: **12.02.2014**
(21) Application number: 10162209.0
(22) Date of filing: 06.05.2010
(51) Int. Cl.: A01K 37/00

(54) **Anti-pecking device**
Antihack-Vorrichtung
Dispositif anti-becquetage

(30) Priority: 12.05.2009 GB 0908083
(43) Date of publication of application: 01.12.2010
(73) Proprietor: Eadie, Brian, Selkirk, TD7 5LU (GB)
(72) Inventor: Edgar, Martin, Selkirk Borders TD7 5EA (GB)
(74) Representative: Hendry, Niall James

(56) References cited:
- WO-A1-96/02131
- FR-A1- 2 157 844
- GB-A- 841 525

## Description

The present invention relates to an anti-pecking device for animals and in particular game birds. More specifically the present invention relates to a self-detaching anti-pecking device.

Animals, such as birds, which are kept in captivity tend to exhibit violent behaviour towards one another. In conflict, birds, for example game birds such as pheasants and partridges, use their sharp pointed beaks to attack other birds. Attacks take the form of feather-pecking and can eventually lead, if blood is drawn, to cannibalism. Violent clashes often result in serious injury and even death.

It is clearly desirable to prevent animals from harming each other. Many well known methods applied to groups of birds kept in captivity include debeaking or beak trimming. These methods however are undesirable as they are painful for the animal and must be repeated at intervals to maintain their effectiveness.

Other methods include the use of anti-pecking devices. A common anti-pecking device is a C-shaped bit that hooks on to one nostril of the bird, passes between upper and lower jaw members of the beak, and hooks on to the other nostril. As the C-shaped bit passes between the upper and lower jaw members of the beak it restricts the extent to which the bird may close its beak. The C-shaped bit prevents the bird from closing its beak fully, thereby preventing the bird from pecking other birds. WO96/02131A discloses such a C-shaped bit having the features recited in the preamble of Claim 1.

However, existing anti-pecking devices have a number of distinct disadvantages. As the bird grows the size of its beak will increase. If the anti-pecking device is not replaced with a larger sized anti-pecking device the device will become tighter on the bird's beak as the bird grows, causing pain and discomfort for the animal.

Existing anti-pecking devices require daily monitoring to ensure the bird has not outgrown the device. Such monitoring can be very time consuming especially for those who farm large flocks of birds. Furthermore, if a bird has outgrown the device, existing anti-pecking devices require human intervention to remove the device from the bird's beak.

It is an aim of the present invention to obviate or mitigate one or more of the aforementioned disadvantages.

According to the present invention there is provided an anti-pecking device comprising a member having first and second limbs and a link portion interconnecting the first and second limbs, wherein each limb has a free end adapted to be attached to an animal, and at least one of the limbs includes a failure region adapted to fracture when the limb is subjected to a predetermined load.

Each limb may include a failure region. The or each limb may include a plurality of failure regions.

The failure region may comprise a notch formed on the limb. The notch may be located on an inner surface of the member. Alternatively, the notch may be located on an outer surface of the member. In a further alternative, the notch may be located on a side face of the member.

The link portion may include a guide means adapted to engage in use with a corresponding guide means on an applicator. The guide means may comprise a channel located in the link portion. Alternatively, the link portion may be of substantially constant cross section, and the guide means may comprise a kink provided in the link portion.

Embodiments of the invention will now be described by way of example only, with reference to the accompanying drawings which are:
Figure 1 provides a side view of a first embodiment of an anti-pecking device;
Figure 2 provides a view of the anti-pecking device of figure 1 when in use on a bird;
Figure 3 provides a perspective view of a second embodiment of an anti-pecking device; and
Figure 4 provides a side view of a third embodiment of an anti-pecking device.

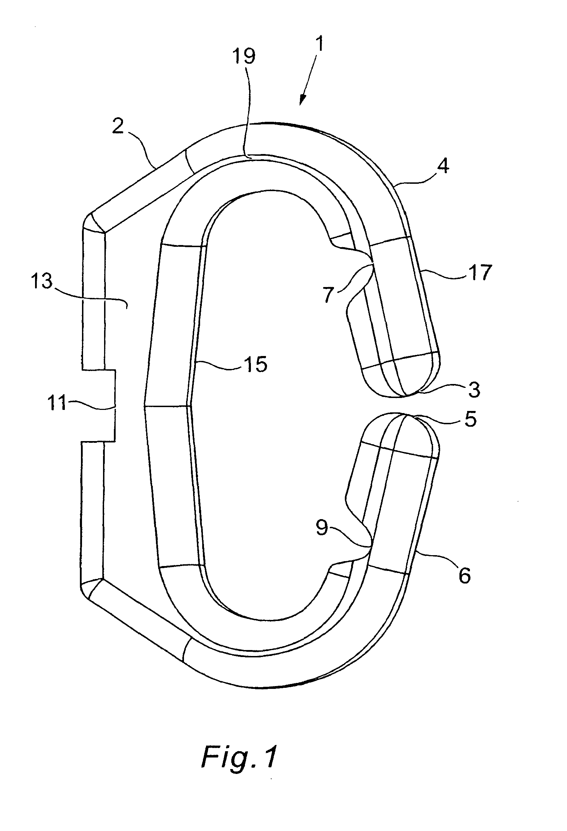

Figure 1 provides a side view of an anti-pecking device 1. An anti-pecking device is a device that will prevent, or will aid in preventing, animals with beaks from pecking one another.

The device 1 comprises a member 2 formed of resilient plastic material, and comprising a first limb 4 and a second limb 6 interconnected by a central link portion 13. In the preferred embodiment illustrated in figure 1, the member 2 is substantially C-shaped. The free end of each limb 4,6 has a respective rounded tip 3,5. The member 2 comprises an inner surface 15, an outer surface 17 and first and second sides, the first side 19 facing the viewer in Figure 1.

Each limb includes a failure region adapted to fracture when the limb is subjected to a predetermined load. In the preferred embodiments illustrated the failure regions comprise notches provided on the limbs. A first notch 7 is provided in the first limb 4 and a second notch 9 is provided in the second limb 6. Both notches 7,9 are located on their respective limbs 4,6 at a point intermediate the tip 3,5 and the link portion 13. In the illustrated embodiment, both first and second notches 7, 9 are provided on the inner surface 15 of the member 2.

The central portion 13 of the member 2 may be of greater thickness than the first and second limbs 4, 6.

The central portion 13 further comprises a guide means in the form of a channel 11. The channel 11 is suitable for engaging a corresponding guide means provided on a bit-fitting gun or device (not shown). The channel 11 will also enable the device 1 to be fitted to birds with smaller sized beaks, for example the beaks of younger birds between age of ten and fourteen days old, as the lower jaw of the bird can lie within the channel 11. The channel 11 is shown to be located halfway along the link portion 13 and is provided on the outer surface 17 of the member 2.

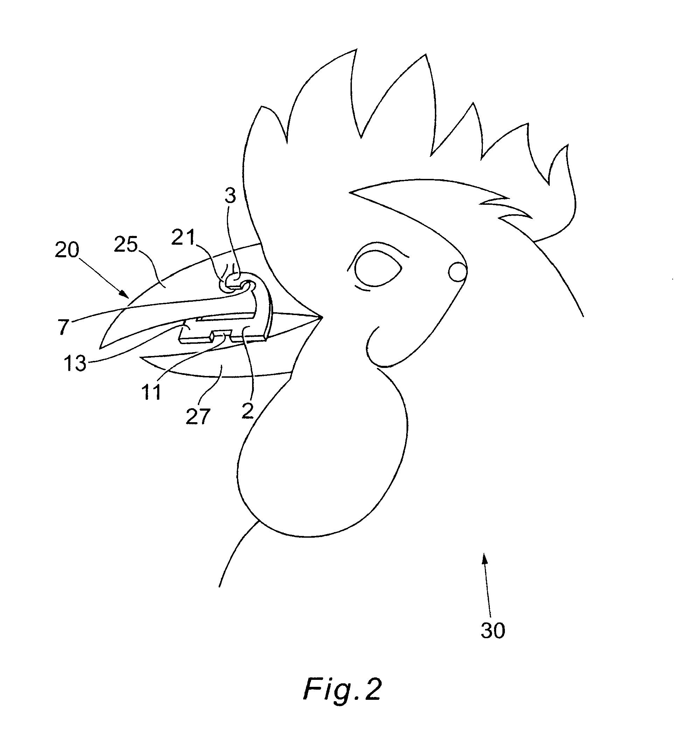

Figure 2 provides a side view of the anti-pecking device 1 of figure 1 in use on a bird 30 having a beak 20. The member 2 is arranged on the bird's beak 20 such that the first rounded tip 3 is received into a first nostril 21 and the second rounded tip (not shown in figure 2) is received into a second nostril on the other side of the beak.

The bird's beak 20 comprises a upper jaw 25 and a lower jaw 27. The member 2 is configured such that when the first rounded tip 3 is received into the first nostril 21 and second rounded tip is received into the second nostril, the thickened central portion 13 of member 2 extends laterally through the beak 20 between the upper jaw 25 and lower jaw 27. When the bird attempts to close its beak 20 the thickened central portion 13 will thus restrict the extent to which the beak 20 can be closed.

As the size of the bird's beak 20 increases over time the member 2 becomes stretched and the load applied to the limbs will increase. The failure regions on each limb provide points of weakness which are designed to fracture when the increasing load on the limbs reaches a predetermined level. Once the bird reaches ten to twelve weeks old its beak 20 has outgrown the anti-pecking device 1. At this time the member 2 will have become stretched to the extent that the load on the limbs 4,6 causes one or both to fracture in the failure region designated by the respective first and second notches 7,9. Once a limb fractures, the member 2 will detach from the bird's beak without any manual manipulation. In this manner the anti-pecking device is "self-detaching".

The device 1 shown in figure 1 is preferably configured such that the member 2 will "self-detach" once the bird reaches an approximate age between ten to twelve weeks old. However, it will be understood that the device 1 may be configured such that it will "self-detach" at any other predetermined age. This may be achieved by, for example, varying the thickness of the limbs and/or the position of the failure regions on the limbs.

The central portion 13 of the device 1 is locatable between the upper jaw 25 and lower jaw 27 of the beak 20 so as to restrict the extent to which the beak 20 can be closed. As the central portion 13 is thickened it will have increased resilience to fracture so that it can withstand the "bite force" of the animal.

As the member 2 is formed of a resilient plastics material the limbs 4,6 may be easily flexed apart from one another to facilitate positioning the device 1 over the animal's beak 20. Once positioned over the animal's beak 20 the member 2 may be released thereby allowing the member 2 to elastically return to its original form. Upon elastically returning to its original form the member 2 will grip the animal's nostrils via the tips 3,5, thereby securing the member 2 to the animal's beak.

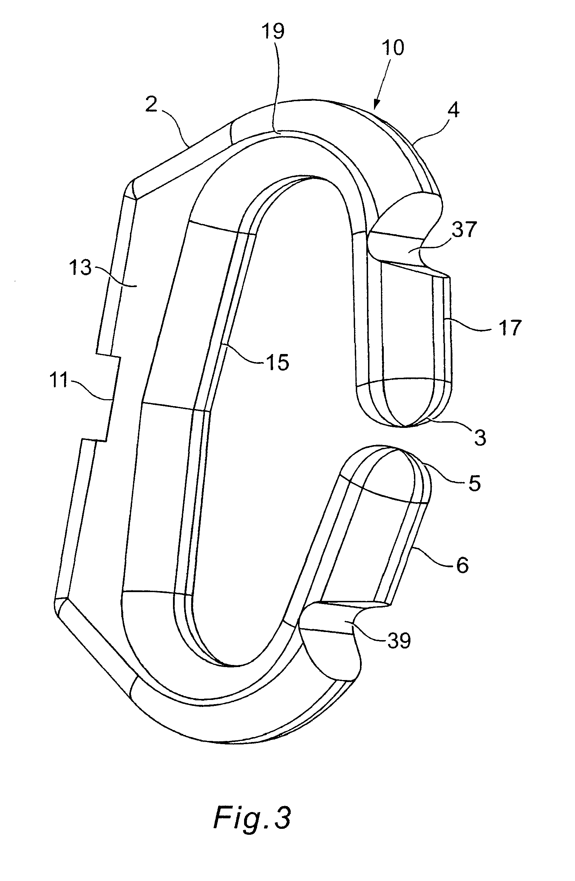

Figure 3 provides a perspective view of a second embodiment of an anti-pecking device 10. The device 10 includes the majority of the features of the first embodiment of the device shown in figures 1 and 2. Like features are hence referenced with the same reference numerals in each embodiment.

Again, failure regions are provided in the form of a first notch 37 on the first limb 4 and a second notch 39 on the second limb 6. However, in the second embodiment both the first and second notches 37,39 are provided on the outer surface 17 of the member 2.

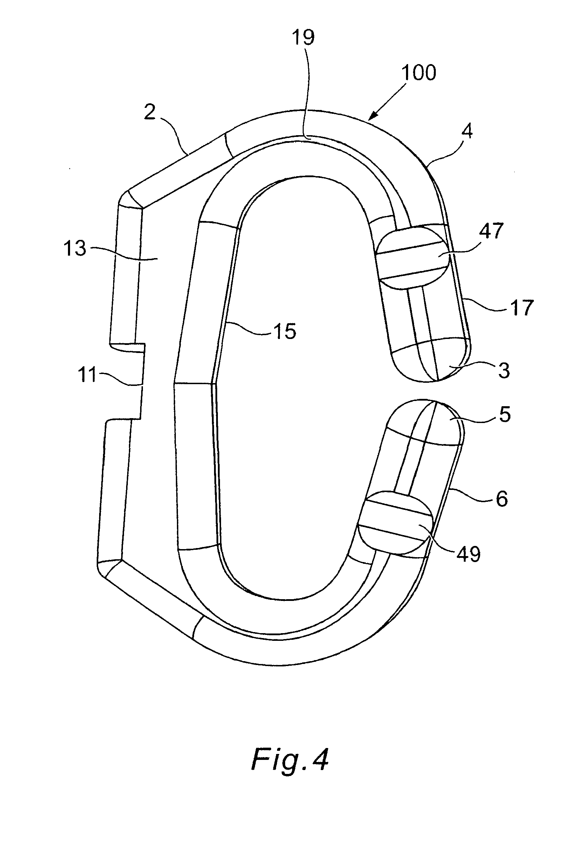

Figure 4 provides a side view of a third embodiment of an anti-pecking device 100. The device 100 includes the majority of the features included in the first and second embodiments, and hence like features are again referred to using the same reference numerals.

A first notch 47 is provided in the first limb 4 and second notch 49 is provided in the second limb 6. In this third embodiment, both the first and second notches 47, 49 are provided on the first side 19 of the member 2.

The second and third embodiments are applied and detached from a bird in the same manner as that of the first embodiment.

The provision of one or more failure regions on the, or each, limb ensures the device "self-detaches" once the animal's beak has outgrown the device. Consequently, no monitoring is required to ensure that the animal has not outgrown the device. Additionally, when the animal does outgrow the device 1, no human intervention is required to remove the device.

Although the preferred embodiments of the device have a failure region on each limb the invention is not limited to such an arrangement. The device may only have a single failure region on one limb. Alternatively, a plurality of failure regions may be provided on one or both limbs. Furthermore, the present invention is not limited to failure regions formed from notches in the limbs. An alternative failure region may be formed from, for example, a groove extending around the circumference of the limb.

Although both the first and second limbs preferably each comprise a rounded tip the invention is not limited to such an arrangement. The first and second limbs may each comprise an end which is of any suitable, shape, aspect or design for being received into nostrils of an animal. It should also be understood that it is not an essential requirement of the invention for the free ends of each limb to locate in a nostril of an animal. Instead, the free ends of the limbs may apply a clamping force to the upper jaw of the beak or mouth of the animal, thus holding the device in place on the upper jaw without any need for the limbs to locate in the nostrils of the animal.

Although the central portion of the member is preferably thicker than the limbs, the invention is not limited to such an arrangement. Furthermore, whilst the preferred embodiments of the present invention describe a member which is substantially C-shaped, it is not essential that the member have this particular shape. For example, the member may be substantially O-shaped with a gap provided between the free ends of the limbs to allow attachment of the device to an animal.

The channel may be configured such that it serves to enhance the resilient properties of the device. Additionally, or alternatively, the channel may be configured such that it serves to make the device suitable for use with birds with smaller sized beaks. For example, for birds with smaller sized beaks (such as young birds aged between ten to fourteen days old) the central portion of the member is sometimes too thick to fit comfortably between the upper and lower jaws of the bird's beak. The channel ensures that the central portion of the member has a reduced thickness. The channel may be configured such that when the member is fitted to the bird's beak the lower jaw of the bird's beak may be received into the channel, thus allowing the central portion of the member to fit comfortably between the upper and lower jaws of the bird's beak. With conventional anti-pecking devices a bird usually must be at least three weeks old before the device may be fitted to their beak, however the presence of the channel means that the anti-pecking device of the present invention has the advantage of enabling the device to be fitted to the bird's beak when the bird is as little as ten to fourteen days old.

Although the channel is preferably located in the middle of said central portion, the invention is not limited to such an arrangement. The channel may be located at any other suitable position on the central portion.

Although the channel is preferably located on the outer surface of the member, the present invention is not limited to such an arrangement. The channel may be located, for example, on the inner surface of the member.

As an alternative to the channel a kink may be formed in the central portion of the member. When a kink is formed in the central portion of the member, the distance between the central portion and the free ends of the limbs is reduced thereby making the device suitable for use on birds with smaller sized beaks. Additionally, providing a kink allows the thickness of the central portion to remain substantially constant and the kink may also act as a guide means for engagement with a corresponding guide means on an applicator gun or device.

In spite of the potential benefits in having a channel or kink present in the central portion, it should be understood that neither is an essential feature of the present invention.

Whilst the limbs and link portion of the present invention are preferably integrally formed from a resilient plastics material, the invention is not limited to either of these features. The limbs could be formed separately from the link portion and then attached thereto. In such an arrangement, the failure region(s) may be provided at the point where the limbs and link portion are attached to one another.

These and other modifications and improvements may be incorporated without departing from the scope of the invention.

## Claims

1. An anti-pecking device comprising a member (2) having first and second limbs (4,6) and a link portion (13) interconnecting the first and second limbs (4,6), wherein each limb (4,6) has a free end adapted to be attached to an animal, and **characterised in that** at least one of the limbs (4,6) includes a failure region adapted to fracture when the limb (4,6) is subjected to a predetermined load.

2. The device of claim 1, wherein each limb (4,6) includes a failure region.

3. The device of either preceding claim, wherein the or each limb (4,6) includes a plurality of failure regions.

4. The device of any preceding claim, wherein the failure region comprises a notch (7,9,37,39,47,49) formed on the limb (4,6).

5. The device of claim 4, wherein the notch (7,9) is located on an inner surface (15) of the member (2).

6. The device of claim 4, wherein the notch (37,39) is located on an outer surface (17) of the member (2).

7. The device of claim 4, wherein the notch (47,49) is located on a side face (19) of the member (2).

8. The device of any preceding claim, wherein the link portion (13) includes a guide means adapted to engage in use with a corresponding guide means on an applicator.

9. The device of claim 8, wherein the guide means comprises a channel (11) located in the link portion (13).

10. The device of claim 8, wherein the link portion (13) is of substantially constant cross section, and the guide means comprises a kink provided in the link portion (13).

## Patentansprüche

1. Eine Antihack-Vorrichtung, die ein Element (2) mit einem ersten und zweiten Schenkel (4, 6) und einem Verbindungsabschnitt (13), der den ersten und zweiten Schenkel (4, 6) miteinander verbindet, beinhaltet, wobei jeder Schenkel (4, 6) ein freies Ende aufweist, das angepasst ist, um an einem Tier angebracht zu werden, und **dadurch gekennzeichnet, dass** mindestens einer der Schenkel (4, 6) einen Bruchbereich umfasst, der angepasst ist, um zu brechen, wenn der Schenkel (4, 6) einer vorbestimmten Last ausgesetzt wird.

2. Vorrichtung gemäß Anspruch 1, wobei jeder Schenkel (4, 6) einen Bruchbereich umfasst.

3. Vorrichtung gemäß einem der vorhergehenden Ansprüche, wobei der oder jeder Schenkel (4, 6) eine Vielzahl von Bruchbereichen umfasst.

4. Vorrichtung gemäß einem der vorhergehenden Ansprüche, wobei der Bruchbereich eine auf dem Schenkel (4, 6) gebildete Einkerbung (7, 9, 37, 39, 47, 49) beinhaltet.

5. Vorrichtung gemäß Anspruch 4, wobei sich die Einkerbung (7, 9) auf einer inneren Oberfläche (15) des Elements (2) befindet.

6. Vorrichtung gemäß Anspruch 4, wobei sich die Einkerbung (37, 39) auf einer äußeren Oberfläche (17) des Elements (2) befindet.

7. Vorrichtung gemäß Anspruch 4, wobei sich die Einkerbung (47, 49) auf einer Seitenfläche (19) des Elements (2) befindet.

8. Vorrichtung gemäß einem der vorhergehenden Ansprüche, wobei der Verbindungsabschnitt (13) ein Führungsmittel umfasst, das angepasst ist, um bei Verwendung in ein entsprechendes Führungsmittel auf einem Applikator einzugreifen.

9. Vorrichtung gemäß Anspruch 8, wobei das Führungsmittel einen in dem Verbindungsabschnitt (13) befindlichen Kanal (11) beinhaltet.

10. Vorrichtung gemäß Anspruch 8, wobei der Verbindungsabschnitt (13) von im Wesentlichen konstantem Querschnitt ist und das Führungsmittel eine in dem Verbindungsabschnitt (13) bereitgestellte Knickstelle beinhaltet.

## Revendications

1. Un dispositif contre les coups de bec comprenant un élément (2) ayant des première et deuxième branches (4, 6) et une portion de liaison (13) raccordant entre elles les première et deuxième branches (4, 6), dans lequel chaque branche (4, 6) a une extrémité libre conçue pour être attachée à un animal, et **caractérisé en ce qu'**au moins une des branches (4, 6) comporte une région de défaillance conçue pour se fracturer lorsque la branche (4, 6) est soumise à une charge prédéterminée.

2. Le dispositif de la revendication 1, dans lequel chaque branche (4, 6) comporte une région de défaillance.

3. Le dispositif de l'une ou l'autre revendication précédente, dans lequel la ou chaque branche (4, 6) comporte une pluralité de régions de défaillance.

4. Le dispositif de n'importe quelle revendication précédente, dans lequel la région de défaillance comprend une encoche (7, 9, 37, 39, 47, 49) formée sur la branche (4, 6).

5. Le dispositif de la revendication 4, dans lequel l'encoche (7, 9) est située sur une surface interne (15) de l'élément (2).

6. Le dispositif de la revendication 4, dans lequel l'encoche (37, 39) est située sur une surface externe (17) de l'élément (2).

7. Le dispositif de la revendication 4, dans lequel l'encoche (47, 49) est située sur une face latérale (19) de l'élément (2).

8. Le dispositif de n'importe quelle revendication précédente, dans lequel la portion de liaison (13) comporte un moyen formant guide conçu pour se mettre en prise lors de l'utilisation avec un moyen formant guide correspondant sur un applicateur.

9. Le dispositif de la revendication 8, dans lequel le moyen formant guide comprend un canal (11) situé dans la portion de liaison (13).

10. Le dispositif de la revendication 8, dans lequel la portion de liaison (13) est de coupe transversale substantiellement constante, et le moyen formant guide comprend un coude prévu dans la portion de liaison (13).
